## Europäisches Patentamt
## European Patent Office
## Office européen des brevets

(11) Numéro de publication: **0 270 428**
**A1**

# (12) DEMANDE DE BREVET EUROPEEN

(21) Numéro de dépôt: **87402565.3**

(22) Date de dépôt: **13.11.87**

(51) Int. Cl.⁴: **C 08 F 246/00**
C 08 F 220/32

(30) Priorité: **14.11.86 FR 8615842**

(43) Date de publication de la demande:
**08.06.88 Bulletin 88/23**

(84) Etats contractants désignés:
**AT BE CH DE ES GB GR IT LI LU NL SE**

(71) Demandeur: **Société Chimique des Charbonnages S.A.**
**Tour Aurore Place des Reflets**
**F-92080 Paris La Défense 2 Cédex 5 (FR)**

(72) Inventeur: **Fourquier, Dominique**
**38, rue des Veneurs**
**F-60610 La Croix St Ouen (FR)**

**Perronin, Jean**
**3 Résidence "La Normandie" Apremont**
**F-60300 Senlis (FR)**

(74) Mandataire: **Rieux, Michel**
**SOCIETE CHIMIQUE DES CHARBONNAGES S.A. Service**
**Propriété Industrielle Tour Aurore Place des Reflets**
**Cédex no. 5**
**F-92080 Paris la Défense 2 (FR)**

(54) **Procédé de réticulation de copolymères (méth)acryliques autoréticulables.**

(57) L'invention a pour objet un procédé de réticulation de copolymères (méth)acryliques autoréticulables, solubles dans les solvants organiques et caractérisés en ce que :
- on prépare une dispersion ou solution ayant une teneur en matières sèches comprise entre 30 et 80 % en poids et une viscosité comprise entre 5 et 5 000 poises, et constituée d'un ou de plusieurs solvants organiques, d'un ou plusieurs copolymères (méth)acryliques, lesdits copolymères étant obtenus par copolymérisation en milieu solvant organique de :
- 10 à 40 % en poids de (méth)acrylate de glycidyle,
- 4 à 20 % en poids d'au moins un monomère monoéthylénique X possèdant une ou plusieurs fonctions carboxyles,
- 40 à 86 % en poids d'au moins un comomère éthylénique Y, le rapport du nombre de fonctions époxy des monomères sur le nombre de fonctions carboxyles des monomères étant compris entre 0.5 et 3,0 et la masse moléculaire moyenne en poids desdits copolymères étant comprise entre 1 000 et 80 000, la dite dispersion ou solution comprenant éventuellement un ou plusieurs catalyseurs de dispersion dans le cas où la somme des fonctions époxy et des fonctions carboxyles des monomères est de l'ordre de 25 % molaire (rapporté au nombre total de moles de monomères) ou inférieure, et que le rapport du nombre de fonctions époxy sur le nombre des fonctions carboxyles est compris entre 2 et 3,

- on applique puis on sèche ladite dispersion ou solution,
- et on la soumet à un traitement thermique entre 30 et 90°C.

Le procédé selon l'invention permet la préparation de pièces moulées, d'imprégnation, d'enduction, d'impression, d'adhésifs, de liants, d'apprêts, de peinture et de vernis.

EP 0 270 428 A1

**Description**

La présente invention a pour objet un procédé de réticulation de copolymères (méth)acryliques autoréticulables et l'application de ces copolymères pour la préparation de pièces moulées, d'imprégnation, d'enduction, d'impression, d'adhésifs, de liants, d'apprêts, de peintures et de vernis.

Depuis que les matières plastiques sont associées aux pièces métalliques, notamment dans le cas des carrosseries pour l'automobile, il est extrêmement souhaitable de disposer de compositions de revêtement réticulables à basses températures et essentiellement à des températures inférieures aux températures d'altération de ces matières plastiques.

Jusqu'à présent, dans le domaine des peintures et revêtements thermodurcissables, on a utilisé toutes sortes de polymères et polycondensats sous forme de solutions, de dispersions ou de poudres. A titre d'exemple, on peut citer les résines alkydes, les polyesters, les résines acryliques, les résines époxydes obtenues, par exemple, par condensation de dérivés du Bis-phénol ou de polyoxyalkylèneglycol avec l'épichlorhydrine, les polyuréthanes préparés à partir de polyols et d'isocyanates, les polyamides.

Parmi celles-ci, les résines époxydes et plus spécialement les époxy des aromatiques sont connues pour être très sensibles à l'action de la lumière et des intempéries. Les résines mettant en oeuvre des isocyanates, admis comme très toxiques, posent, quant à elles, des problèmes à l'utilisation.

Parmi les autres, on a porté un intérêt particulier aux résines acryliques présentées sous forme de dispersion, mais plus généralement en solution dans des solvants organiques. Appliquées à hautes températures (généralement entre 130°C et 200°C durant 30 minutes environ) elles permettent d'obtenir des revêtements dotés, non seulement de bonnes caractéristiques mécaniques, mais également de bonnes propriétés, de durabilité, de résistance aux intempéries, à l'eau, aux solvants et aux agents chimiques en général.

C'est ainsi que des copolymères acryliques hydroxylés ont été revendiqués dans les brevets FR 2 247 516, DE 3 148 051, BB 888 572 en combinaison avec des "agents de réticulation" micromoléculaires ou macromoléculaires tels que aminoplastes, résines époxydes ou phénoplastes. La réticulation de ces copolymères est obtenue en présence de catalyseurs acides, tel que l'acide paratoluène sulfonique ou de catalyseurs acides latents, tels que les "catalyseurs bloqués" décrits dans le brevet FR 2 533 575 qui permettent de préparer, par mélange, des compositions de revêtement stockables plusieurs jours sans évoluer. Malheureusement, les revêtements ainsi obtenus, réticulés à basses températures, par exemple à 90°C durant 30 minutes, sont relativement sensibles à l'action prolongée de l'eau et ne conviennent pas pour les applications précitées.

Pour pallier cet inconvénient des copolymères acryliques préparés à partir d'acrylate ou méthacrylate de glycidyle ont été préconisés. Ces copolymères sont réticulés, par mélange, avec des "agents de réticulation", tel que : les diacides ou polyacides carboxyliques mentionnés dans les brevets US 2 857 354 ou FR 2 149 409, les anhydrides de diacides cités dans le brevet BE 819 623, les résines phénolformol, polyamide ou urée formol signalées dans le brevet US 3 058 947 ou les résines comportant des groupes amines, amides, acides ou thiols mentionnées dans le brevet EP 0 129 394. Ces réticulations sont favorisées par la présence, dans ce mélange, de catalyseurs connus tels que les sels de tétraalcoylammonium, les dérivés d'imidazole, les amines tertiaires, ou les sels d'acides carboxyliques. Ces compositions appliquées en couches minces sur des substrats métalliques, conduisent après traitement thermique à basse température, à des revêtements dont la tenue à l'eau est en effet relativement bonne. Malheureusement, la réticulation étant incomplète dans ces conditions, la tenue aux solvants est insuffisante.

Par ailleurs, le brevet US 2604 463 décrit des copolymères thermoplastiques linéaires à base de (méth)acrylate de glycidyle, d'acide (méth)acrylique, de styrène et de (méth)acrylate de méthyle, autoréticulables à 150°C et dont la teneur en acide et en ester de glycidyle n'excède pas 20 % en poids de la masse totale.

Or, il a été trouvé, conformément à la présente invention des copolymères(méth)acryliques "autoréticulables" en l'absence des agents de réticulation cités plus haut et dont la réticulation se fait parfaitement à des températures relativement basses, comprises entre 30 et 90°C, et généralement entre 60 et 90°C.

Plus précisément, l'invention a pour objet un procédé de réticulation de copolymères (méth)acryliques autoréticulables solubles dans les solvants organiques et caractérisé en ce que :
- on prépare une dispersion ou solution ayant une teneur en matières sèches comprise entre 30 et 80 % en poids et une viscosité comprise entre 5 et 5 000 poises, et constituée d'un ou de plusieurs solvants organiques, d'un ou plusieurs copolymères (méth)acryliques, lesdits copolymères étant obtenus par copolymérisation en milieu solvant organique de :
- 10 à 40 % en poids de (méth)acrylate de glycidyle,
- 4 à 20 % en poids d'au moins un monomère monoéthylénique X possèdant une ou plusieurs fonctions carboxyles,
- 40 à 86 % en poids d'au moins un comonère éthylénique Y,
La masse moléculaire moyenne en poids desdits copolymères étant recomprise entre 1 000 et 80 000 et le rapport du nombre de fonctions époxy des monomères sur le nombre de fonctions carboxyles des monomères étant compris entre 0,5 et 3,0, La dite dispersion ou solution comprenant éventuellement un ou plusieurs catalyseurs de polymérisation dans le cas où la somme des fonctions époxy et des fonctions carboxyles des monomères est de l'ordre de 25 % molaire (rapporté au nombre total de moles de monomères) ou inférieure, et que le rapport du nombre de fonctions époxy sur le nombre des fonctions carboxyles est compris entre 2 et 3,
- on applique puis on sèche ladite dispersion ou solution,
- et on la soumet à un traitement thermique entre 30 et 90°C.

De préférence, les copolymères selon l'invention sont obtenus par copolymérisation en milieu solvant organique à partir de :
- 12 à 40 % en poids de (méth)acrylate de glycidyle,
- 5 à 16 % en poids d'au moins un monomère monoéthylénique X possèdant une ou plusieurs fonctions carboxyles,
- 54 à 83 % en poids d'au moins un comonomère éthylénique Y.

De préférence, le rapport du nombre de fonctions époxy sur le nombre de fonctions carboxyles est compris entre 1 à 2.

De préférence encore, les copolymères selon l'invention ont une masse moléculaire moyenne en poids comprise entre 10 000 et 50 000.

Les copolymères selon l'invention sont incolores. Ils ont une température de transition comprise entre 0°C et 80°C, et généralement entre 20°C et 50°C. Leur indice d'acide est généralement compris entre 30 et 120 (mesuré selon la norme NFT No 30402) et leur équivalent époxy est de l'ordre de 0,8 à 2,8 équivalent/kg (mesuré selon la norme NFT No 51522).

Comme monomères monoéthyléniques X possèdant un ou plusieurs groupes carboxyliques convenant à l'invention, on peut citer à titre d'exemples non limitatifs, l'acide acrylique, l'acide méthacrylique, l'acide diméthyle-3,3-acrylique, l'acide 4-pentenoïque, l'acide itaconique, l'acide crotonique, l'acide allylglycolique, l'acide 10-undécénoïque, l'acide maléïque, l'acide fumarique, les maléates acides d'alcoyle, les fumarates acides d'alcoyle, les itaconates acides d'alcoyle, le dicarboxymonoacryloyle isocyanurate.

Comme monomères éthyléniques Y possèdant une ou plusieurs liaisons éthyléniques convenant à l'invention, on peut citer des esters acryliques ou méthacryliques tels que les acrylates ou les méthacrylates de méthyle, d'éthyle, de butyle, d'isobutyle, de tertiobutyle d'hexyle, d'éthyle-2 hexyle, de lauryle, de stéaryle, de cyclohexyle, de benzyle, de phényle, de norbornyle, de méthoxyéthyle, d'éthyldiglycol, de tert.butylcyclohexanol, de β-phényléthyle, de tétrahydrofurfuryle, de dihydro dicyclo pentadiényle, de dibromopropyle, de [N-méthyl N (perfluorooctyl)-2 éthyl sulfonyl] amino-2 éthyle, de trifluoroéthyle, de perfluorohexyl)-2 éthyle, ainsi que l'acrylonitrile, le méthacrylonitrile, le chlorure de 2-triméthyle ammonium éthyle acrylate. On peut également utiliser d'autres monomères éthyléniques tels que les dérivés vinyliques : l'acétate de vinyle, le propionate de vinyle, l'isobutyrate de vinyle, le sénécioate de vinyle, le laurate de vinyle, l'octanoate de vinyle, l'éthyl-2 hexanoate de vinyle, l'éther vinylméthylique, l'éther vinyléthylique, l'éther vinylisobutylique, l'éther vinyloctadecylique, le chlorure de vinyle, le chlorure de vinylidène, les esters vinyliques des acides connus sur le marché sous le nom des acides versatiques. On peut également utiliser des hydrocarbures halogénés ou non tels que l'éthylène, le propylène, l'isobutylène, le styrène, l'α-méthylstyrène, le vinyltoluène, l'α-cyanométhylstyrène. On peut enfin utiliser en quantité inférieure à 2 % en poids de monomères contenant plusieurs fonctions éthyléniques Y, tel que le méthacrylate d'allyle, le diméthacrylate d'éthylèneglycol, le diméthacrylate de butanediol-1,4, le triméthacrylate de triméthylolpropane, le diacrylate d'hexanediol, le tetra acrylate de pentaérythrite, le butadiène, le chlorobutadiène, le divinylbenzène, l'isocyanurate de triallyle.

En outre, comme comonomères Y possèdant une ou plusieurs liaisons éthyléniques, on peut éventuellement, employer des monomères contenant des groupes fonctionnels tels que les acrylates et méthacrylates hydroxyalkyliques comme le monoacrylate d'éthylène glycol, le mono méthacrylate de propylène glycol et le monoacrylate de butane diol ; l'allyloxyéthanol, l'alcool allylique, le N-(hydroxyméthyl)acrylamide - l'allylamine, l'acrylate et méthacrylate de diméthylaminoéthyle, l'acrylate de diéthylaminoéthyle, l'acrylate de diméthyle aminopentyle, le vinylpyridine, le vinyl imidazole, le vinyl-1 méthyl-2 imidazole, le vinylcarbazole, le vinyl caprolactame, la vinylpyrolidone, l'acrylamide et la méthacrylamide, la N-(isobutoxyméthylacrylamide), la N-isopropylacrylamide, la méthylacrylamido glycolate méthyléther, l'anhydride maléïque, l'anhydride citraconique, l'acide vinyl sulfonique, l'acide styrène parasulfonique, l'acroléïne.

Les copolymères selon l'invention sont obtenus selon le procédé connu de copolymérisation en solution. La réaction de copolymérisation peut être initiée par des catalyseurs anioniques, cationiques, ou par des catalyseurs ou rayonnements capables de produire des radicaux libres. La copolymérisation peut être conduite de façon continue, discontinue, incrémentale ou programmée, à des températures variées, comprises par exemple entre 40°C et 160°C suivant les monomères et les catalyseurs mis en oeuvre. Préférentiellement, dans la présente invention, on opère par voie radicalaire.

Dans ces conditions, pour initier la réaction de copolymérisation, on utilise des composés peroxygénés tels que le peroxyde de benzoyle, le peroxyde de lauroyle, le peroxydicarbonate de bis (4 ter butylcyclohexyle), le perdécanoate de tertio butyle, le perbenzoate de t. butyle, le perpivalate de tertio butyle, le peroxyde de méthyléthylcétone, l'hydropéroxyde de tertio butyle, le peroxyde de tertio butyle, l'acide peracétique ou des oxydes d'amine. On utilise aussi comme initiateurs des composés azo tels que l'azo 22' bis isobutyronitrile, l'acide azo 44' bis (cyano 4 pentanoïque), l'azo 22' bis (24 diméthyl valéronitrile) ou des systèmes Redox tels que les couples peroxyde de lauroyle - acétyl acétone ou 2-3 butane dione, perpivalate de tertiobutyle - octoate de cobalt, peroxyde de benzoyle - diméthylparatoluidine. Les quantités de catalyseur à mettre en oeuvre peuvent varier dans de larges limites, par exemple entre 0,5 et 8 % par rapport au poids des monomères à copolymériser, de préférence entre 2 et 5 %.

Pour régler la masse moléculaire des copolymères selon l'invention et la viscosité de leur solution, on utilise lors de leur préparation, des agents de transfert connus de l'homme de l'art, tels que les alkylmercaptans comme le tertio dodécylmercaptan, le N-dodécylmercaptan, l'acide thioglycolique, ou tels que le tétrachlorure de carbone, le tétrabromure de carbone, le triphénylméthane. Les quantités à mettre en oeuvre sont fonction des valeurs de masse moléculaire à obtenir et peuvent aller jusqu'à 5 % par rapport au poids des monomères, et varier de préférence entre 0,1 et 1 %.

On effectue la copolymérisation en solution, en utilisant un ou plusieurs solvants dans lesquels le copolymère est soluble. C'est ainsi qu'on utilise des solvants tels que le toluène, le xylène, la méthyléthylcétone, l'acétate d'éthylglycol, l'isopropanol, le butanol, le trichloréthane, le méthylisobutylcarbinol, l'acétate de butyle, le méthyl glycol et l'éthylglycol, le dibutyl éther, le méthylcyclohexane, le 2-nitropropane, l'heptane, le white spirit, le cumène, en mélange ou non.

Avantageusement, les solutions ou dispersions selon l'invention contiennent également un ou plusieurs catalyseurs de réticulation qui améliorent encore leur réactivité et permettent de ce fait de diminuer à la fois la température et la durée du traitement thermique lors de la réticulation de ces solutions ou dispersions. En effet, on a trouvé que l'emploi d'un catalyseur de polymérisation est indispensable lorsque le ou les copolymères selon l'invention sont tels que la somme des fonctions époxy des monomères et des fonctions carboxyles des monomères utilisés pour préparer le(s) dit(s) copolymère est de l'ordre de 25 % molaire (rapporté au nombre total de moles de monomères) ou inférieure, et que le rapport du nombre de fonctions époxy sur le nombre de fonctions carboxyles est compris entre 2 et 3. En effet, dans ce cas, quelles qui soient les conditions opératoires utilisées lors du traitement thermique (notamment température, durée du traitement), les caractéristiques du revêtement final préparé à partir d'une solution ou d'une dispersion selon l'invention sont moyennes, voire médiocres si ladite solution ou dispersion ne contient pas de catalyseur de polymérisation. Par contre, dans le cas où le copolymère utilisé est tel que la somme des fonctions époxy des monomères et des fonctions carboxyles des monomères est supérieure à 25 % molaire (rapporté au nombre de moles de monomères), et que le rapport du nombre de fonctions époxy sur le nombre de fonctions carboxyles est inférieur à 2, alors l'utilisation d'un catalyseur de polymérisation n'est pas indispensable pour obtenir un revêtement possédant d'excellentes caractéristiques. On utilise de l'ordre de 0,1 à 10 % en poids de catalyseur de polymérisation par rapport à la quantité du ou des copolymères (méth)acryliques autoréticulables.

Les catalyseurs de réticulation convenant à la préparation des solutions et dispersions selon l'invention, et favorisant la réticulation des copolymères selon l'invention, sont par exemple des sels de tétraalcoylphosphonium, des dérivés d'imidazole, des amines tertiaires, des dérivés du bore, ou des sels d'acides carboxyliques. A titre d'exemple, on peut citer : l'acétate de tétrabutyle phosphonium, le bromure de tétraphényle phosphonium, le chlorure de 4(hydroxyméthyl) imidazole, l'imidazole ou glyoxaline, le méthyl-2 imidazole, le méthyl-1 imidazole, le méthyl-4 imidazole, le diméthyl-24 imidazole, l'éthyl-2 méthyl-4 imidazole , l'undécyl-2 imidazole, le phényl-2 méthyl-4 imidazole, le benzyl-1 méthyl-2 imidazole, le cyanoéthyl-1 phényl-2 imidazole trimellitate, le diamino-2,4 (éthyl-2′ méthyl-4′ imidazoyle (1′)2-éthyl-s-triazine, le cyanoéthyl-1 phényl-2 di(cyanoéthoxyméthyl)-4,5 imidazole, le phosphate de 2[N-(benzyl anilino)-méthyl]-2 imidazoline, le chlorhydrate de 2-benzyl-2 imidazoline, la benzimidazole, le mercapto benzimidazole, le 2-mercapto thiazoline, la pipérazine, la N-méthylmorpholine, la NN′-diéthylcyclohexylamine, la NN-diméthylbenzylamine, la dicyanidiamide, la triphényle phosphine, le trifluorure de bore, les complexes BF3-monométhylamine ou monoéthylamine, BF3-méthyl-2 imidazole, BF3-phénol, le triéthylène diamine, le chlorure stannique, le chlorure d'aluminium, le chlorure de tri-phényl étain, le dilaurate de dibutyl étain, le nitrate d'uranyle, acétylacétonate d'aluminium, le naphténate de cobalt. On peut aussi utiliser des produits tels que le vinyl-1 imidazole, le vinyl-1 méthyl-2 imidazole, leurs polymères ou leurs copolymères. Il est également possible d'utiliser des catalyseurs bloqués tels que les complexes méthyl-2 imidazole - acide pyroméllitique ou acide isocyanurique, des urées substituées telles que décrites dans le brevet Européen EP 0 108 712, des cétimines ou aldimines comme le NN′-dicinnamylidène-1,6 hexanediamine, les composés décrits dans le brevet français FR 2 544 723, les hydrazides comme celles citées dans le brevet européen EP 106 635, des imidazoles comme celles citées dans les brevets européen EP 0 124 482 et allemand DE 33 27 827, ou encore des oxydes d'amines.

De préférence, on utilise des solutions ou dispersions de copolymères (méth)acryliques autoréticulables dont la teneur en matières sèches est élevée et comprise entre 50 et 60 % en poids.

De préférence encore, les solutions ou dispersions selon l'invention ont une viscosité comprise entre 10 et 500 poises exprimée à 60 % de matières sèches.

Les solvants organiques convenant à la préparation des solutions et dispersions selon l'invention sont par exemple ceux utilisés pour la copolymérisation en solution et cités précédemment.

Les solutions ou dispersions selon l'invention peuvent contenir en outre, divers adjuvants tels que des colloïdes, des épaississants, des agents tensio-actifs, des agents dispersants, des agents anti-oxydants, des anti-UV, des stabilisants, des agents de tension, des inhibiteurs de corrosion, des agents de broyage, des siccatifs, des agents anti-peaux, des agents anti-statiques, des agents anti-cratères, des plastifiants, des lubrifiants, des agents anti-mousse, des agents hydrofuges, des oléofuges, des cires naturelles ou synthétiques, des fongicides.

Dans le même esprit, ces solutions ou dispersions peuvent, en outre, contenir éventuellement, d'autres copolymères ainsi que des condensats, résines ou liants, naturels ou synthétiques, différents des copolymères selon l'invention. A titre d'exemple, on peut citer des copolymères vinyliques ou acryliques, des résines alkydes, des résines polyesters, des polyamides, des dérivés de cellulose comme les acétates ou acéto-butyrates de cellulose, des carboxy ou alkylcelluloses, nitrocellulose, ou des gommes naturelles comme la gomme laque et les dérivés de colophane.

Ces solutions ou dispersions peuvent aussi contenir des charges organiques ou minérales, telles que carbonate de calcium, silice, particules de verre, fibres de verre ou de carbone, talc, kaolin, alumine, etc...

Enfin, ces solutions ou dispersions peuvent contenir, aussi, des pigments ou colorants minéraux ou organiques, solubles ou dispersés. A titre d'exemples non limitatifs, on peut citer comme pigments minéraux, le dioxyde de titane, le lithopone, le sulfate de baryum, le sulfate de calcium, le silicate basique de plomb, le chromate de zinc, l'oxyde de zinc, les oxydes de fer, le chromate de plomb, le bleu Outremer, l'oxyde vert de chrome, le rouge de Molybdène, le noir de carbone. Toujours à titre d'exemple non limitatifs, on peut citer comme pigments organiques, des colorants appartenan aux classes les plus diverses telles que azoïques, azométhiniques, anthraquinone, phtalocyanine, indigoïdes. Comme telles, on peut mentionner l'Indanthrone pigmentaire (Colour Index no 69800), le "CI Pigment Yellow 16" (no 20040), le "CI Pigment Green 7" (no 74260), le "CI Pigment Yellow 14" (no 21095), le pigment disazoïque obtenu par copulation du dérivé tétrazoïque d'une mole de diamino-4-4'-dichloro-3,3'-diphényle avec 2 moles de N-acétoacétyl-p-chloraniline, le vert de phtalocyanine de cuivre chloré, les bleus de phtalocyanine de cuivre $\alpha$ et $\beta$. Dans le même but, on peut utiliser des paillettes de métaux comme des paillettes d'aluminium.

Les solutions ou dispersions selon l'invention peuvent contenir "en un seul pot", essentiellement, en mélange, un ou plusieurs des copolymères en solution, caractérisés ci-dessus et éventuellement un ou plusieurs catalyseurs de réticulation. Ces compositions sont ainsi appliquées sur un substrat et elles sont suffisamment stables pour être stockées plusieurs jours à température ambiante, en général de 1 à 5 jours.

Les solutions ou dispersions selon l'invention peuvent être appliquées selon les techniques classiques comme la pulvérisation, le pistolage, le couchage, l'impression, la brosse, le rouleau, le rideau ou l'arrosage.

Après application et séchage, ceux-ci subissent un traitement thermique de plusieurs minutes, généralement de 10 à 120 minutes, aux températures relativement basses définies précédemment, à savoir comprises entre 30°C et 90°C, et généralement entre 60°C et 90°C.

On peut également réaliser les revêtements en appliquant simultanément une partie constituée de la solution ou dispersion selon l'invention et l'autre du catalyseur de réticulation. Sur le plan pratique, on peut pour cela opérer par pulvérisation avec un pistolet alimenté simultanément par deux réservoirs.

Les solutions ou dispersions selon l'invention peuvent être appliquées sur divers substrats comme le métal, le bois, le verre, les matières plastiques, etc... En particulier, elles peuvent être appliquées sur des substrats métalliques comme l'acier ou l'aluminium, avec ou sans couche d'apprêt, telle que les couches à base de phosphate de zinc ou de résines déposées par électrophorèse.

Les revêtements appliqués à partir des solutions ou dispersions selon l'invention après un séchage éventuel, sont réticulables à des températures comprises entre 30°C et 90°C et généralement entre 60°C et 90°C et sont dotés de bonnes tenues à l'eau et aux solvants. Ils présentent en outre de bonnes caractéristiques générales.

Les exemples suivants, dans lesquels les parties indiquées sont en poids et les températures en degrés centigrades, illustrent l'invention sans la limiter.

EXEMPLE 1

Dans un réacteur muni d'un dispositif de chauffage, d'un condenseur à reflux, d'un agitateur, d'un thermomètre, d'une arrivée d'azote et d'une ampoule d'introduction de réactifs, on charge 393 parties d'acétate d'éthyl glycol que l'on chauffe à 78°C, sous atmosphère d'azote.

Par ailleurs, on prépare un mélange de 123,7 parties de méthacrylate de glycidyle, de 35,4 parties d'acide méthacrylique, de 218,1 parties d'acrylate de butyle et de 212,1 parties de méthacrylate de méthyle dans lequel on dissout, en maintenant le mélange à une température inférieure à 15°C, 17,7 parties de péroxydicarbonate de bis-4-terbutylcyclohexyle.

Le mélange des monomères et du catalyseur est introduit par l'intermédiaire de l'ampoule, en deux heures, dans le réacteur maintenu à une température de 78±1°C.

Après addition des monomères, un palier supplémentaire de 1 h à la température de 78°C est maintenu avant refroidissement final.

La résine ainsi obtenue possède un extrait sec de 59,2 % (mesuré par étuvage de 0,5 partie de résine durant une heure à 150°C), ce qui correspond à un rendement de copolymérisation de 97,6 %, une viscosité à 20°C de 625 poises, une masse moléculaire moyenne en poids (ci-après dénommé Mp) de 48 000 g et une température de transition vitreuse (ci-après dénommée Tg) de 20°C.

EXEMPLE 2

Dans un réacteur muni d'un dispositif de chauffage, d'un condenseur à reflux, d'un agitateur, d'un thermomètre, d'une arrivée d'azote et d'une ampoule d'introduction de réactifs, on charge 390,8 parties de méthylisobutylcétone que l'on chauffe à 78°C, sous atmosphère d'azote.

Par ailleurs, on prépare un mélange de 129,9 parties de méthacrylate de glycidyle, de 49,4 parties d'acide méthacrylique, de 34,5 parties de méthacrylate d'hydroxyéthyle, de 177,0 parties d'acrylate de butyle et de 183,9 parties de méthacrylate de méthyle dans lequel on dissout, en maintenant une température inférieure à 15°C, 20,1 parties de peroxydicarbonate de bis-4-tertiobutylhexyle.

Le mélange des monomères et du catalyseur est introduit par l'intermédiaire de l'ampoule en 45 minutes dans le réacteur maintenu à une température de 78 ± 1°C. Après addition des monomères, un palier complémentaire de 45 minutes à 78 ± 1°C est maintenu. Durant ce palier, une addition supplémentaire de 2,9 parties de peroxydicarbonate de bis-4-tertiobutylcyclohexyle est faite, goutte-à-goutte, en 15 minutes, 10 minutes après la fin d'introduction des réactifs, cela afin de parachever la réaction de copolymérisation des monomères. Le mélange réactionnel est ensuite refroidi.

La résine ainsi obtenue possède un extrait sec de 58,8 % (mesuré par un étuvage de 0,5 partie de résine durant 1 heure à 150°C), ce qui correspond à un rendement de 98,3 %, une viscosité à 20°C de 305 poises, une Mp de 64 000 g et un Tg de 28°C.

EXEMPLE 3

Dans un réacteur muni d'un dispositif de chauffage, d'un condenseur à reflux, d'un agitateur, d'un thermomètre, d'une arrivée d'azote et d'une ampoule d'introduction de réactifs, on charge 376,2 parties de méthylisobutylcétone que l'on chauffe à 78°C sous atmosphère d'azote.

Par ailleurs, on prépare un mélange de 123,0 parties de méthacrylate de glycidyle, 35,1 parties d'acide méthacrylique, 216,8 parties d'acrylate de butyle et de 210,9 parties de méthacrylate de méthyle dans lequel on dissout, en maintenant le mélange à une température inférieure à 15°C, 20,5 parties de péroxydicarbonate de bis-4-tertiobutylcyclohexyle.

Le mélange des monomères et du catalyseur est introduit par l'intermédiaire de l'ampoule, en 45 minutes, dans le réacteur maintenu à une température de 78 ± 1°C. Après addition des monomères, un palier complémentaire de 45 minutes à la température de 78°C est maintenu. Durant ce palier, une addition supplémentaire de 2,9 parties de peroxydicarbonate de bis-4-tertiobutylcyclohexyle dissout dans 14,6 parties de méthylisolbutylcétone est faite goutte-à-goutte en 15 minutes, 10 minutes après la fin d'introduction des réactifs, cela afin de parachever la réaction de copolymérisation des monomères. Le mélange réactionnel est ensuite refroidi.

La résine ainsi obtenue possède un extrait sec de 59,5 %, (mesuré par étuvage de 0,5 partie de résine durant une heure à 150°C), ce qui correspond à un rendement de copolymérisation de 98,2 %, une viscosité à 20°C de 67 poises, une Mp de 44 200 g et un Tg de 17°C.

EXEMPLE 4

Dans un réacteur muni d'un dispositif de chauffage, d'un condenseur à reflux, d'un agitateur, d'un thermomètre, d'une arrivée d'azote et d'une ampoule d'introduction de réactifs, on charge 395,4 parties d'acétate d'éthyglycol que l'on chauffe à 80°C, sous atmosphère d'azote.

Par ailleurs, on prépare un mélange de 82,6 parties de méthacrylate de glycidyle, de 33,7 parties d'acide méthacrylique, de 261,5 parties d'acrylate de butyle et de 203,5 parties de méthacrylate de méthyle dans lequel en dissout, en maintenant le mélange à une température inférieure à 15°C, 23,3 parties de peroxydicarbonate de bis-4-tertiobutylcyclohexyle.

Le mélange des monomères et du catalyseur est introduit par l'intermédiaire de l'ampoule, en deux heures, dans le réacteur maintenu à une température de 80 ± 2°C. Après addition des monomères, un palier complémentaire de 1 heure à la température de 80°C est maintenu avant refroidissement final. La résine ainsi obtenue possède un extrait sec de 58,9 % (mesuré par étuvage de 0,5 partie de résine durant une heure à 150°C), ce qui correspond à un rendement de copolymérisation de 97,2 %, une viscosité à 20°C de 78 poises, une Mp de 34 600 g et un Tg de 9°C.

EXEMPLE 5

On réalise une première composition conforme à la présente invention en mélangeant 67,6 parties du copolymère (méth)acrylique préparé dans l'exemple 1, 2,0 parties d'une solution à 40 % en poids dans l'éthanol, de méthyl-2 imidazole et 30,4 parties d'acétate d'éthylglycol réalisant ainsi un mélange liquide à un extrait sec de 40,8 % et contenant 2 % en sec sur sec de méthyl-2 imidazole. Ce mélange présente une stabilité au stockage de 2 jours à température ambiante, au bout desquels une prise en masse est observée.

A l'aide du filmographe Erichsen de 150 µm, on dépose envison 1,5 parties de cette première composition, sur une plaque métallique phosphatée PARCOBOND 1041 de PARKER, de 85 x 185 mm, que l'on laisse sécher 15 minutes à température ambiante.

On accélère ensuite la réticulation et l'évaporation des solvants en effectuant en étuve ventilée à 90°C, un traitement thermique de la plaque ainsi revêtue pendant 30 minutes.

Le revêtement ainsi obtenu présente les caractéristiques suivantes, mesurées après un repos du film à température ambiante de 24 heures après la cuisson :

- une épaisseur de 35 microns
- une dureté au pendule de Persoz selon la norme NFT 30016 de 270 secondes.
- une résistance à la détrempe au xylène de 12 minutes. Cette résistance est mesurée par le temps au bout duquel le maintien sur le film d'un coton fortement imbibé de xylène permet le grattage, même superficiel, l'aide de l'ongle ou d'un bâtonnet de bois, d'une pellicule de film.
- une résistance à la détrempe à l'acétone de 2 minutes, mesurée à l'aide d'un mode opératoire identique.

- aucune modification, même légère, du brillant et de l'aspect du film, après 500 heures d'immersion de l'éprouvette précédemment réalisée dans un bain d'eau distillée, maintenu à 40°C ± 1°C, selon la norme NFT 30054.

A titre de comparaison, une deuxième composition, réalisée selon le mode opératoire décrit dans cet exemple mais sans ajout de catalyseur de réticulation, c'est-à-dire de méthyl-2 imidazole, a été appliquée. Les caractéristiques du revêtement ainsi obtenu dans les mêmes conditions sont nettement inférieures :
- une dureté Persoz de 230 secondes
- des résistances à la détrempe au xylène et à l'acétone nulle
- un gonflement du film après 50 heures d'immersion dans l'eau.

Avec un tel copolymère et dans de telles conditions opératoires, la présence d'un catalyseur de réticulation est indispensable.

## EXEMPLE 6

On réalise une composition conforme à la présente invention en mélangeant 67,2 parties du copolymère acrylique préparé dans l'exemple 3, 1,2 parties de méthyl-1 imidazole pur, ce qui correspond à une teneur en sec sur sec de 3 %, et 31,6 parties d'acétate d'éthyl glycol. Ce mélange présente une stabilité au stockage de 2 jours à température ambiante. Toutes autres choses étant par ailleurs égales, on reprend le mode opératoire de l'exemple 5 pour obtenir un revêtement réticulé dont les caractéristiques sont les suivantes :
- une dureté Persoz de 305 secondes.
- une résistance à la détrempe au xylène de 6 minutes.
- une résistance à la détrempe à l'acétone de 45 secondes.
- aucune modification ni du brillant, ni de l'aspect de surface du film après une immersion de 500 heures dans un bain d'eau à 40°C.

## EXEMPLE 7

On réalise une composition conforme à la présente invention en mélangeant 67,9 parties du copolymère acrylique préparé comme dans l'exemple 4, 3,0 parties de la solution précédente de méthyl-2 imidazole, ce qui correspond à une teneur en sec sur sec de 3 %, et 29,1 parties d'acétate d'éthylglycol.

Ce mélange présente une stabilité au stockage de 3 jours à température ambiante. Toutes autres choses étant par ailleurs égales, on reprend le mode opératoire de l'exemple 5 pour obtenir un revêtement réticulé dont les caractéristiques sont les suivantes :
- une dureté Persoz de 230 secondes
- une résistance à la détrempe au xylène de 1,5 minute
- une résistance à la détrempe à l'acétone de 20 secondes
- aucune modification ni du brillant, ni de l'aspect de surface du film après une immersion de 500 heures dans un bain d'eau à 40°C.

## EXEMPLE 8

On reprend le mode opératoire de l'exemple 5 en y apportant les modifications suivantes : on utilise une première composition conforme à la présente invention de 68 parties du copolymère acrylique dans l'exemple 2, 5 parties de la solution précédente de méthyl-2 imidazole, ce qui correspond à une teneur de 5 % en sec sur sec, et 27 parties d'acétate d'éthyglycol, et on réalise un traitement thermique de 30 minutes à 75°C.

La stabilité au stockage de cette première composition est de 1 jour à température ambiante.

Toutes autres choses étant par ailleurs égales, on obtient un revêtement réticulé dont les caractéristiques sont :
- une dureté Persoz de 260 secondes
- une résistance à la détrempe au xylène de 11 minutes
- une résistance à la détrempe à l'acétone de 40 secondes
- aucune modification de l'aspect de surface et du brillant du film après 500 heures d'immersion dans un bain d'eau à 40°C.

A titre de comparaison, une deuxième composition, réalisée selon le mode opératoire décrit dans l'exemple 8, mais sans ajout de catalyseur de réticulation, c'est-à-dire de méthyl-2 imidazole, a été appliquée. Les caractéristiques du revêtement ainsi obtenu dans les mêmes conditions sont les suivantes :
- une dureté Persoz de 150 secondes
- une résistance à la détrempe du xylène de 60 secondes
- une résistance à la détrempe à l'acétone nulle
- un gonflement du film après 100 heures d'immersion dans un bain d'eau a 40°C.
Avec un tel copolymère et un tel traitement thermique (75°C durant 30 minutes), la présence d'un catalyseur de polymérisation est indispensable.

## EXEMPLE 9

On réalise une nouvelle composition en reprenant le mode opératoire de l'exemple 8 et en y apportant les modifications suivantes :
- suppression du méthyl-2 imidazole
- traitement thermique de 1 heure à 90°C.

7

Toutes autres choses étant par ailleurs égales, on obtient un revêtement réticulé dont les caractéristiques sont les suivantes :
- une dureté Persoz de 305 secondes
- une résistance à la détrempe au xylène de 10 minutes
- une résistance à la détrempe à l'acétone nulle
- aucune modification ni du brillant, ni de l'aspect de surface du film après une immersion de 100 heures dans un bain d'eau à 450°C.

En conséquence, avec un tel copolymère et dans de telles conditions opératoires, la présence d'un catalyseur de réticulation n'est pas indispensable.

EXEMPLES 10 à 15

On réalise un certain nombre de compositions et de revêtements conformes à la présence invention avec le copolymère et selon le mode opératoire décrit dans l'exemple 5, en effectuant des modifications de la nature et de la teneur en catalyseur de réticulation et des variations de traitement thermique.

Le tableau de résultats suivant montre que les revêtements ainsi réalisés sont réticulés.

| N° Exemple | Nature du Catalyseur et teneur (en % en poids) | Durée de vie de pot de la composition | Conditions du traitement thermique | Dureté Persoz du revêtement (NFT 30053) | Détrempe au xylène du revêtement (en minutes) | Détrempe à l'acétone du revêtement (en secondes) |
|---|---|---|---|---|---|---|
| 10 | 5 % piperazine | 12 h | 1/2h - 90°C | 295 sec | 7 | 105 |
| 11 | 20 % hydrazide | < 12 h | 1/2h - 90°C | 200 sec | 10 | 100 |
| 12 | 5 % Mercaptobenzimidazole | 1 J | 1/2h - 90°C | 250 sec | 2 | 25 |
| 13 | 5 % BF3 monoéthylamine | 6 J | 1/2h - 110°C | 220 sec | 1 | 15 |
| 14 | 5 % acétate de tétrabutylphosphonium | < 1 J | 1/2h - 90°C | 270 sec | 7 | 100 |
| 15 | 5 % diméthylbenzylamine | < 1 J | 1/2h - 90°C | 300 sec | 5 | 45 |

0 270 428

**Revendications**

1. Procédé de réticulation de copolymères (méth)acryliques autoréticulables, solubles dans les solvants organiques, et caractérisés en ce que :
- on prépare une dispersion ou solution ayant une teneur en matières sèches comprise entre 30 et 80 % en poids et une viscosité comprise entre 5 et 5 000 poises, et constituée d'un ou de plusieurs solvants organiques, d'un ou plusieurs copolymères (méth)acryliques, lesdits copolymères étant obtenus par copolymérisation en milieu solvant organique de :
- 10 à 40 % en poids de (méth)acrylate de glycidyle,
- 4 à 20 % en poids d'au moins un monomère monoéthylénique X possèdant une ou plusieurs fonctions carboxyles,
- 40 à 86 % en poids d'au moins un comomère éthylénique Y,
le rapport du nombre de fonctions époxy des monomères sur le nombre de fonctions carboxyles des monomères étant compris entre 0,5 ET 3, 0 et la masse moléculaire moyenne en poids desdits copolymères étant comprise entre 1 000 et 80 000, ladite dispersion ou solution comprenant éventuellement un ou plusieurs catalyseurs de polymérisation dans le cas où la somme des fonctions époxy et des fonctions carboxyles des monomères est de l'ordre de 25 % molaire (rapporté au nombre total de moles de monomères) ou inférieure, et que le rapport du nombre de fonctions époxy sur le nombre des fonctions carboxyles est compris entre 2 et 3,
- on applique puis on sèche ladite dispersion ou solution,
- et on la soumet à un traitement thermique entre 30 et 90°C.

2. Procédé selon la revendication 1, caractérisé en ce que les dits copolymères sont obtenus par copolymérisation en milieu solvant organique de :
- 12 à 40 % en poids de (méth)acrylate de glycidyle
- 5 à 16 % en poids d'au moins un monomère X possèdant une ou plusieurs fonctions carboxyles,
- 54 à 83 % en poids d'au moins un comonomère éthylénique Y.

3. Procédé selon la revendication 1 ou 2, caractérisé en ce que le rapport du nombre de fonctions époxy des monomères sur le nombre de fonctions carboxyles des monomères est compris entre 1 et 2.

4. Procédé selon l'une quelconque des revendications 1 à 3 caractérisé en ce que la masse moléculaire moyenne en poids des copolymères est compris entre 10 000 et 50 000.

5. Procédé selon l'une quelconque des revendications 1 à 4, caractérisé en ce que le traitement thermique est effectué entre 60 et 90°C.

6. Procédé selon l'une quelconque des revendications 1 à 5, caractérisé en ce que le traitement thermique est imposé de 10 à 120 minutes.

7. Procédé selon l'une quelconque des revendications 1 à 6, caractérisé en ce que la teneur en matières sèches de ladite dispersion ou solution est comprise entre 50 et 60 % en poids.

8. Procédé selon l'une quelconque des revendications 1 à 7, caractérisé en ce que la viscosité de ladite dispersion ou solution est comprise entre 10 et 500 poises exprimée à 60 % en poids de matières sèches.

9. Application du procédé selon l'une quelconque des revendications 1 à 8 à la préparation de revêtements réticulables à des températures comprises entre 30°C et 90°C dans le domaine des pièces moulées, d'imprégnation, d'enduction, d'impression, d'adhésifs, de liants, d'apprêts, de peintures et de vernis.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-2 604 463  (J.A. BILTON)<br>* Revendication 1; exemple 1 *<br>--- | 1-9 | C 08 F 246/00<br>C 08 F 220/32 |
| A | EP-A-0 183 213  (MITSUBISHI)<br>* Revendication 1 *<br>--- | 1-9 | |
| A | DE-A-2 851 616  (SYNTHOPOL CHEMIE)<br>* Revendication 1 *<br>----- | 1-9 | |

**DOMAINES TECHNIQUES RECHERCHES (Int. Cl.4)**

C 08 F

Le présent rapport a été établi pour toutes les revendications

| Lieu de la recherche | Date d'achèvement de la recherche | Examinateur |
|---|---|---|
| LA HAYE | 19-02-1988 | CAUWENBERG C.L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

EPO FORM 1503 03.82 (P0402)